# EUROPÄISCHE PATENTSCHRIFT

(11) **EP 2 848 918 B1**
(45) Veröffentlichungstag und Bekanntmachung des Hinweises auf die Patenterteilung: **24.04.2019**
(21) Anmeldenummer: 13184199.1
(22) Anmeldetag: 12.09.2013
(51) Int. Cl.: G01N 21/39, G01J 3/433, G01N 21/3504

(54) **Gasanalysator**
Gas analyser
Analyseur de gaz

(43) Veröffentlichungstag der Anmeldung: 18.03.2015
(73) Patentinhaber: Siemens Aktiengesellschaft, 80333 München (DE)
(72) Erfinder: Depenheuer, Daniel, 76751 Jockgrim (DE); Hankiewicz, Thomas, 76149 Karlsruhe (DE)

(56) Entgegenhaltungen:
- EP-A1- 2 610 608
- EP-B1- 1 475 618
- US-A1- 2011 216 311
- US-B1- 6 351 309
- US-B1- 7 969 576

## Beschreibung

Die Erfindung betrifft einen Gasanalysator zur Messung der Konzentration einer Gaskomponente in einem Messgas basierend auf dem Verfahren der Wellenlängenmodulationsspektroskopie, mit
- einer wellenlängenabstimmbaren Lichtquelle,
- einer ersten Modulationseinrichtung, die die Wellenlänge des Lichts der Lichtquelle über eine interessierende Absorptionslinie der Gaskomponente periodisch variiert und dabei zusätzlich mit einer Frequenz moduliert,
- Mitteln, die das Licht der Lichtquelle durch das Messgas auf einen Messdetektor führen oder einen ersten Teil des Lichts der Lichtquelle durch das Messgas auf den Messdetektor und einen zweiten Teil des Lichts durch ein die zu messende Gaskomponente in einer vorgegebenen Konzentration enthaltendes Referenzgas auf einen Referenzdetektor führen,
- einer Auswerteeinrichtung, die ein von dem Messdetektor erzeugtes Messsignal oder das Messsignal und ein von dem Referenzdetektor erzeugtes Referenzsignal bei einer Oberschwingung der Frequenz demodulieren und auswerten, und
- einer zweiten Modulationseinrichtung, die die Wellenlänge des Lichts der Lichtquelle mit der Oberschwingung und einer Modulationsintensität moduliert, die in Abhängigkeit von einem bei der Oberschwingung demodulierten Ausgangssignal eines Detektors gesteuert wird.

Ein derartiger Gasanalysator ist aus der EP 1 475 618 B1 bekannt.

Bei dem bekannten Gasanalysator handelt es sich um ein Laserspektrometer, das insbesondere für die optische Gasanalyse in der Prozessmesstechnik eingesetzt wird. Eine wellenlängenabstimmbaren Lichtquelle in Form einer Laserdiode erzeugt Licht im Infrarotbereich, das durch das zu messende Prozessgas (Messgas) geführt und anschließend detektiert wird. Die Wellenlänge des Lichts wird auf eine spezifische Absorptionslinie der jeweils zu messenden Gaskomponente abgestimmt, wobei die Laserdiode die Absorptionslinie periodisch wellenlängenabhängig abtastet. Dazu wird die Laserdiode periodisch mit einem rampen- oder dreieckförmigen Stromsignal angesteuert. Bei der Wellenlängenmodulationsspektroskopie (WMS) wird während der vergleichsweise langsamen Abtastung der Absorptionslinie zusätzlich die Wellenlänge des erzeugten Lichts mit hoher Frequenz und kleiner Amplitude sinusförmig moduliert. Da das Profil der Absorptionslinie nicht linear ist, werden auch Harmonische höherer Ordnung in dem Messsignal erzeugt. Das Messsignal wird üblicherweise bei einer n-ten Oberschwingung, vorzugsweise der zweiten Harmonischen, durch phasensensitive Lock-in Technik ausgewertet. Bei kleiner Modulationsamplitude ist die Detektion der n-ten Harmonischen direkt proportional zu der n-ten Ableitung des direkten Messsignals, weswegen für die WMS auch die Bezeichnung derivative Absorptionsspektroskopie verwendet wird.

Um eine kontinuierliche Selbstkalibrierung und Nullpunktbestimmung des Gasanalysators zu ermöglichen, ist es z. B. aus der US 6,351,309 B1 bekannt, das von der Lichtquelle erzeugte Licht mittels eines Strahlteilers oder optischen Kopplers aufzuteilen, wobei ein Teil des Lichts durch das Messgas auf den Messdetektor und der andere Teil durch eine Referenzgaszelle mit einem die zu messende Gaskomponente in einer vorgegebenen Konzentration enthaltenden Referenzgas auf einen Referenzdetektor geführt wird. Das Referenzsignal wird ebenfalls bei der n-ten Oberschwingung demoduliert und ausgewertet.

Ein in Bezug auf das Verhältnis von optischer Ausgangsleistung und elektrischer Ansteuerleistung nichtlineares Verhalten der wellenlängenabstimmbaren Lichtquelle sowie Etalon-, Reflexions- und Polarisationseffekte bei der Auskopplung und Führung des Lichts aus bzw. von der Lichtquelle in das Mess- und ggf. Referenzgas führen zu harmonischen Störsignalanteilen, die mit den auszuwertenden n-ten Oberschwingungen des Mess- bzw. Referenzsignals interferieren. Zur Unterdrückung dieser Störsignalanteile wird bei dem aus der EP 1 475 618 B1 bekannten Gasanalysator ein Teil des von der Lichtquelle erzeugten Lichts unmittelbar auf einen Monitordetektor geführt und das erhaltene Monitorsignal bei der n-ten Oberschwingung demoduliert und ausgewertet. Jede Abweichung des demodulierten Monitorsignals von einer Nulllinie beruht auf einer optischen Störung, die, soweit sie im Bereich der Lichtquelle und/oder des Lichtwegs bis zu dem Strahlteiler oder optischen Koppler entstanden ist, auch das Messsignal und ggf. das Referenzsignal beeinträchtigt. Diese Störung wird durch eine Vorverzerrung der Ansteuerung der Lichtquelle kompensiert, indem die Wellenlänge des Lichts zusätzlich mit der n-ten Oberschwingung moduliert wird, wobei die Modulationsintensität von dem demodulierten Monitorsignal abhängig ist.

Die Auskopplung eines Teils des erzeugten Lichts auf den Monitordetektor ist mit einem erhöhten konstruktiven und schaltungstechnischen Aufwand verbunden, der mit einer höheren Störempfindlichkeit einhergeht.

Der Erfindung liegt die Aufgabe zugrunde, diesen Aufwand zu verringern.

Gemäß der Erfindung nach Anspruch 1 wird die Aufgabe dadurch gelöst, dass bei dem Gasanalysator der eingangs angegebenen Art
- der Detektor, in Abhängigkeit von dessen demoduliertem Ausgangssignal die Modulationsintensität gesteuert wird, der Messdetektor oder der Referenzdetektor ist, und
- dass eine Recheneinrichtung vorhanden ist, die in einem Modell anhand einer analytischen Näherungsbeschreibung der lorentzförmigen Absorptionslinie der zu messenden Gaskomponente und mit Hilfe von zusätzlichen Informationen aus dem aktuellen demodulierten Referenzsignal ein Modellsignal für das demodulierte Messsignal oder Referenzsignal erzeugt, ein Differenzsignal zwischen dem Modellsignal und dem demodulierten Messsignal oder Referenzsignal bildet und die Modulationsintensität mit dem Differenzsignal steuert.

Insbesondere in dem Referenzkanal liegen sehr gut definierte und kontrollierbare Bedingungen (Druck, Temperatur, Konzentration der interessierenden Gaskomponente) vor, so dass das zu erwartende demodulierte Referenzsignal anhand einer analytischen Näherungsbeschreibung der idealerweise lorentzförmigen Absorptionslinie der zu messenden Gaskomponente und erforderlichenfalls zusätzlichen Informationen (z. B. Position der Absorptionslinie) des durch Detektion erhaltenen Referenzsignals mit hoher Genauigkeit modelliert werden kann. Bei hinreichend genauer Modellierung enthält die Differenz zwischen dem Modellsignal und dem demodulierte Referenzsignal nur noch die Störungen, die im Weiteren entsprechend der aus der EP 1 475 618 B1 bekannte Vorverzerrung der Ansteuerung der Lichtquelle kompensiert werden.

Bei günstigen Messbedingungen, wenn z. B. die Absorptionslinie der zu messenden Gaskomponente stark ausgebildet und sich nicht mit anderen Absorptionslinien überlappt, kann auch das demodulierte Messsignal selbst für die Störungskompensation verwendet werden, wobei in diesem Fall das zu erwartende demodulierte Messsignal anhand der analytischen Beschreibung der Absorptionslinie der zu messenden Gaskomponente und zusätzlichen Informationen (z. B. Position, Breite und Höhe der Absorptionslinie) des durch Detektion erhaltenen Messsignals modelliert wird.

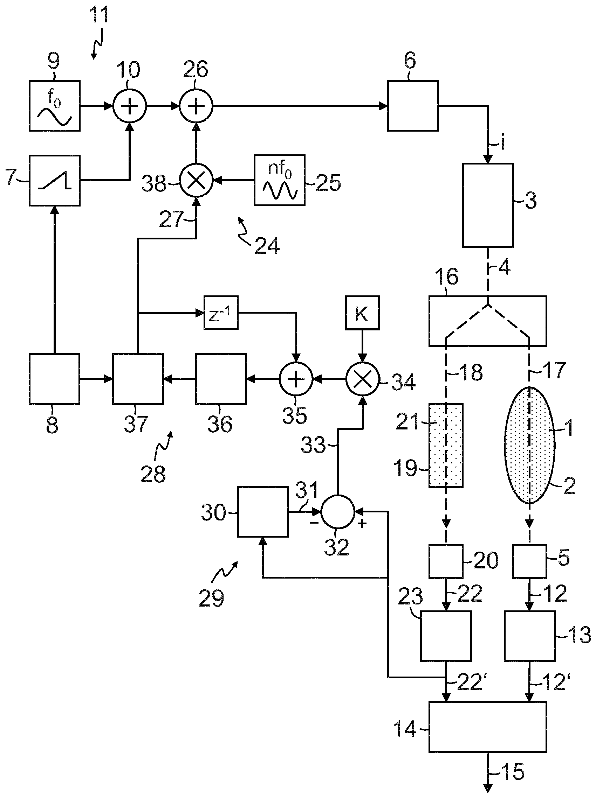

Zur weiteren Erläuterung der Erfindung wird im Folgenden auf die einzige Figur der Zeichnung Bezug genommen, die ein Ausführungsbeispiel des erfindungsgemäßen Gasanalysators in Form eines Blockschaltbildes zeigt.

Bei dem gezeigten Gasanalysator handelt es sich um ein Laserspektrometer zur Messung der Konzentration mindestens einer interessierenden Gaskomponente eines Messgases 1, das in einem Messvolumen 2, beispielsweise einer Messküvette oder einer Prozessgasleitung, enthalten ist. Das Spektrometer enthält eine Lichtquelle 3 in Form einer Laserdiode, deren Licht 4 nach Durchstrahlen des Messgases 1, auf einen Messdetektor 5 fällt. Die Laserdiode 3 wird von einer steuerbaren Stromquelle 6 mit einem Injektionsstrom i angesteuert, wobei die Intensität und Wellenlänge des erzeugten Lichts 4 von dem Strom i und der Betriebstemperatur der Laserdiode 3 abhängen. Die Stromquelle 6 wird von einer ersten Signalgenerator 7 periodisch mit einer vorgegebenen, vorzugsweise rampen- oder dreieckförmigen Funktion angesteuert, um mit der mehr oder weniger linear dem Verlauf des Stromes i folgenden Wellenlänge des erzeugten Lichts 4 eine ausgewählte Absorptionslinie der interessierenden Gaskomponente abzutasten. Der Signalgenerator 7 wird dazu von einem Adressgenerator 8 gesteuert, so dass jede Abtastposition einen zugordneten Adresswert hat. Ein zweiter Signalgenerator 9 erzeugt ein sinusförmiges Signal der Frequenz f₀, mit dem in einem Summierglied 10 die rampen- oder dreieckförmige Funktion moduliert wird. Die Funktionsblöcke 7 bis 10 bilden eine erste Modulationseinrichtung 11.

Der Messdetektor 5 erzeugt in Abhängigkeit von der detektierten Lichtintensität ein Messsignal 12, das in einem Lock-in-Verstärker 13 bei einer Harmonischen n·f₀ der Modulationsfrequenz f₀ demoduliert wird und aus dem in einer nachfolgenden Auswerteeinrichtung 14 ein die Konzentration der zu messenden Gaskomponente des Messgases 1 angebendes Messergebnis 15 erzeugt wird.

Um eine kontinuierliche Selbstkalibrierung und Nullpunktbestimmung des Gasanalysators zu ermöglichen, wird das Licht 4 der Laserdiode 3 mittels eines Strahlteilers oder optischen Kopplers 16 in einen Teil 17 durch das Messgas 1 und einen anderen Teil 18 durch eine Referenzgaszelle 19 zu einem Referenzdetektor 20 aufgeteilt. Die Referenzgaszelle 19 ist mit einem Referenzgas 21 gefüllt, das die zu messende Gaskomponente in einer vorgegebenen Konzentration enthält. Der Referenzdetektor 20 erzeugt ein Referenzsignal 22, das in einem weiteren Lock-in-Verstärker 23 bei der Harmonischen n·f₀ demoduliert wird und mit dem in der nachfolgenden Auswerteeinrichtung 14 das Messergebnis 15 referenziert wird.

Eine zweite Modulationseinrichtung 24 ist vorgesehen, um Beeinträchtigungen des demodulierten Messsignals 12' und Referenzsignals 22' aufgrund von Nichtlinearitäten der Laserdiode 3 und optischen Störeinflüsse auf dem Lichtweg zwischen der Laserdiode 3 und dem Strahlteiler bzw. optischen Koppler 16 durch Vorverzerrung der Ansteuerung der Laserdiode 3 an der Stelle der Oberschwingung n·f₀ zu kompensieren. Die Modulationseinrichtung 24 enthält einen dritten Signalgenerator 25, der ein sinusförmiges Signal der Frequenz n·f₀ erzeugt, mit dem über ein weiteres Summierglied 26 die Ansteuerung der Laserdiode 3 moduliert wird. Dabei werden die Modulationsintensität 27 bzw. der Betrag der Vorverzerrung mittels eines adaptiven Algorithmus 28 in Abhängigkeit von dem demodulierten Referenzsignal 22' und der jeweils aktuellen Abtastposition bei der wellenlängenabhängigen Abtastung der Absorptionslinie gesteuert.

Eine Recheneinrichtung 29 erzeugt in einem Modell 30 anhand einer analytischen Näherungsbeschreibung der lorentzförmigen Absorptionslinie der zu messenden Gaskomponente und mit Hilfe von zusätzlichen Informationen aus dem aktuellen demodulierten Referenzsignal 22' ein Modellsignal 31, das idealerweise dem störungsfreien demodulierten Referenzsignal entspricht. In einem Subtrahierglied 32 wird ein Differenzsignal 33 aus dem Modellsignal 31 und dem demodulierten Referenzsignal 22' gebildet, das nur noch die Störungen enthält. Aus diesem Differenzsignal 33 wird mittels des adaptiven Algorithmus 28 die Größe 27 der Vorverzerrung berechnet. Dazu wird das Differenzsignal 33 in einem Multiplizierer 34 mit einem Faktor K multipliziert und über ein Summierglied 35 und ein FIR-Tiefpassfilter 36 einer Speichereinrichtung 37 zugeführt, die eine Look-up-Tabelle enthält. Die Look-up-Tabelle enthält für jede von dem Adressgenerator 8 erzeugte Abtastposition m jeweils einen Wert Lₘ, mit dem das n·f₀-Signal des Signalgenerators 25 in einem Multiplizierer 38 multipliziert wird. Der in der jeweils vorangegangenen Abtastperiode u-1 erhaltene Wert L_{m,u-1} wird auf das Summierglied 35 zurückgeführt und dort zu dem mit dem Faktor K gewichteten Wert s_{m,u} des Differenzsignals 33 der aktuellen Abtastperiode u an der Stelle der Abtastposition m hinzuaddiert. Dadurch werden die in der Look-up-Tabelle enthaltenen Werte wie folgt laufend aktualisiert: L_{m,u} = L_{m,u-1} + k·s_{m,u}. Im Ergebnis werden die von dem Differenzsignal 33 dargestellten Störungen durch die Vorverzerrung der Ansteuerung der Laserdiode 3 hochpassgefiltert.

## Patentansprüche

1. Gasanalysator zur Messung der Konzentration einer Gaskomponente in einem Messgas (1) basierend auf dem Verfahren der Wellenlängenmodulationsspektroskopie, mit
- einer wellenlängenabstimmbaren Lichtquelle (3),
- einer ersten Modulationseinrichtung (11), die die Wellenlänge des Lichts (4) der Lichtquelle (3) über eine interessierende Absorptionslinie der Gaskomponente periodisch variiert und dabei zusätzlich mit einer Frequenz (f₀) moduliert,
- Mitteln (16), die das Licht (4) der Lichtquelle (3) durch das Messgas (1) auf einen Messdetektor (5) führen oder einen ersten Teil (17) des Lichts (4) der Lichtquelle (3) durch das Messgas (1) auf den Messdetektor (5) und einen zweiten Teil (18) des Lichts (4) durch ein die zu messende Gaskomponente in einer vorgegebenen Konzentration enthaltendes Referenzgas (21) auf einen Referenzdetektor (20) führen,
- einer Auswerteeinrichtung (13, 14, 23), die ein von dem Messdetektor (5) erzeugtes Messsignal (12) oder das Messsignal (12) und ein von dem Referenzdetektor (20) erzeugtes Referenzsignal (22) bei einer Oberschwingung (n·f₀) der Frequenz (f₀) demodulieren und auswerten, und
- einer zweiten Modulationseinrichtung (24), die die Wellenlänge des Lichts (4) der Lichtquelle (3) mit der Oberschwingung (n·f₀) und einer Modulationsintensität moduliert, die in Abhängigkeit von einem bei der Oberschwingung (n·f₀) demodulierten Ausgangssignal eines Detektors gesteuert wird,
**dadurch gekennzeichnet,**
- **dass** es sich bei dem Detektor, in Abhängigkeit von dessen demoduliertem Ausgangssignal die Modulationsintensität (27) gesteuert wird, um den Messdetektor (5) oder den Referenzdetektor (20) handelt, und
- **dass** eine Recheneinrichtung (29) vorhanden ist, die in einem Modell (30) anhand einer analytischen Näherungsbeschreibung der lorentzförmigen Absorptionslinie der zu messenden Gaskomponente und mit Hilfe von zusätzlichen Informationen aus dem aktuellen demodulierten Referenzsignal (22') ein Modellsignal (31) für das demodulierte Messsignal (12') oder Referenzsignal (22') erzeugt, ein Differenzsignal (33) zwischen dem Modellsignal (31) und dem demodulierten Messsignal (12') oder Referenzsignal (22') bildet und die Modulationsintensität (27) mit dem Differenzsignal (33) steuert.

## Claims

1. Gas analyser for measuring the concentration of a gas component in a measurement gas (1) based on the method of wavelength modulation spectroscopy, having
- a wavelength-tunable light source (3),
- a first modulation device (11) which periodically varies the wavelength of the light (4) from the light source (3) by way of an absorption line of interest of the gas component and thereby additionally modulates it with a frequency (f₀),
- means (16) which guide the light (4) from the light source (3) through the measurement gas (1) to a measurement detector (5) or guide a first part (17) of the light (4) from the light source (3) through the measurement gas (1) to the measurement detector (5) and guide a second part (18) of the light (4) to a reference detector (20) through a reference gas (21) containing the gas component to be measured in a predetermined concentration,
- an evaluation device (13, 14, 23) which demodulates and evaluates a measurement signal (12) generated by the measurement detector (5), or the measurement signal (12) and a reference signal (22) generated by the reference detector (20) in the case of a harmonic component (n·f₀) of the frequency (f₀), and
- a second modulation device (24) which modulates the wavelength of the light (4) from the light source (3) with the harmonic component (n·f₀) and a modulation intensity which is controlled as a function of an output signal of a detector demodulated in the case of the harmonic component (n·f₀),
**characterised in that**
- the modulation intensity (27) is controlled as a function of the demodulated output signal of the detector, which is the measurement detector (5) or the reference detector (20),
- an arithmetic unit (29) is present which, in a model (30) based on an analytical approximation description of the Lorentz-shaped absorption line of the gas component to be measured and with the aid of additional information from the current demodulated reference signal (22'), generates a model signal (31) for the demodulated measurement signal (12') or reference signal (22'), forms a difference signal (33) between the model signal (31) and the demodulated measurement signal (12') or reference signal (22'), and controls the modulation intensity (27) with the difference signal (33).

## Revendications

1. Analyseur de gaz pour mesurer la concentration d'un constituant gazeux d'un gaz (1) à mesurer, reposant sur le procédé de la spectroscopie à modulation de longueur d'onde, comprenant
- une source (3) lumineuse accordable en longueur d'onde,
- un premier dispositif (11) de modulation, qui fait varier périodiquement la longueur d'onde de la lumière (4) de la source (3) lumineuse sur une raie d'absorption à laquelle on s'intéresse du constituant gazeux et la module ainsi supplémentairement par une fréquence (f₀),
- des moyens (16), qui envoient la lumière (4) de la source (3) lumineuse, à travers le gaz (1) à mesurer, à un détecteur (5) de mesure ou une partie (17) de la lumière (4) de la source (3) lumineuse, à travers le gaz (1) à mesurer, au détecteur (5) de mesure, et envoient une deuxième partie (18) de la lumière, à travers un gaz (21) de référence, contenant le constituant gazeux à mesurer en une concentration donnée à l'avance, à un détecteur (20) de référence,
- un dispositif (13, 14, 23) d'exploitation, qui démodule à un harmonique (n.f₀) de la fréquence (f₀) et exploite le signal (12) de mesure produit par le détecteur (5) de mesure ou le signal (12) de mesure et un signal (22) de référence produit par le détecteur (20) de référence et
- un deuxième dispositif (24) de modulation, qui module la longueur d'onde de la lumière (4) de la source (3) lumineuse à l'harmonique (n.f₀) et à une intensité de modulation, qui est commandée en fonction d'un signal de sortie d'un détecteur démodulé à l'harmonique (n.f₀),
**Caractérisé en ce que**
- le détecteur, en fonction du signal de sortie démodulé duquel l'intensité (27) de modulation est commandée, est le détecteur (5) de mesure ou le détecteur (20) de référence et
- **en ce qu'**il y a un dispositif (29) de calcul, qui, suivant un modèle (30), produit, à l'aide d'une description analytique approximative de la raie d'absorption lorentzienne du constituant gazeux à mesurer et à l'aide d'informations supplémentaires provenant du signal (22') de référence démodulé instantané, un signal (31) de modèle, pour le signal (12') de mesure ou le signal (22') de référence démodulé, forme un signal (33) de différence entre le signal (31) de modèle et le signal (12') de mesure ou le signal (22') de référence démodulé et commande l'intensité (27) de modulation par le signal (33) de différence.
